# FASCICULE DE BREVET EUROPEEN

(11) **EP 0 406 108 B1**
(45) Date de publication et mention de la délivrance du brevet: **03.11.1993**
(21) Numéro de dépôt: 90401841.3
(22) Date de dépôt: 27.06.1990
(51) Int. Cl.: B23Q 1/00, B23Q 16/08

(54) **Porte-outil de machine outil associé à un disposisif de connexions automatiques**
Werkzeugträger für eine Werkzeugmaschine mit einer automatischen Kupplungsvorrichtung
Toolholder for a machine tool having an automatic connection device

(30) Priorité: 28.06.1989 FR 8908596
(43) Date de publication de la demande: 02.01.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Chomel, Claude André René, F-91720 Maisse (FR)
(74) Mandataire: Moinat, François

(56) Documents cités:
- EP-A- 0 126 195
- US-A- 4 057 881
- US-A- 4 611 377

## Description

La présente invention concerne une machine-outil selon le préamble de la revendication 1.

Il est fréquemment nécessaire lors de la préparation d'une opération d'usinage sur machine-outil d'établir au moins une connexion entre un dispositif monté sur une tourelle, constituant le porte-outil, et un dispositif d'alimentation fixé sur la machine ou placé à côté de la machine. Cette connexion peut être électrique, pneumatique ou hydraulique notamment et doit ainsi permettre le passage du courant ou fluide correspondant. Ces opérations de connexion nécessitent habituellement une intervention manuelle de l'opérateur qui allonge les temps de préparation comporte des risques d'erreur ou d'oubli et reste dans tous les cas incompatible avec un fonctionnement automatisé de machine.

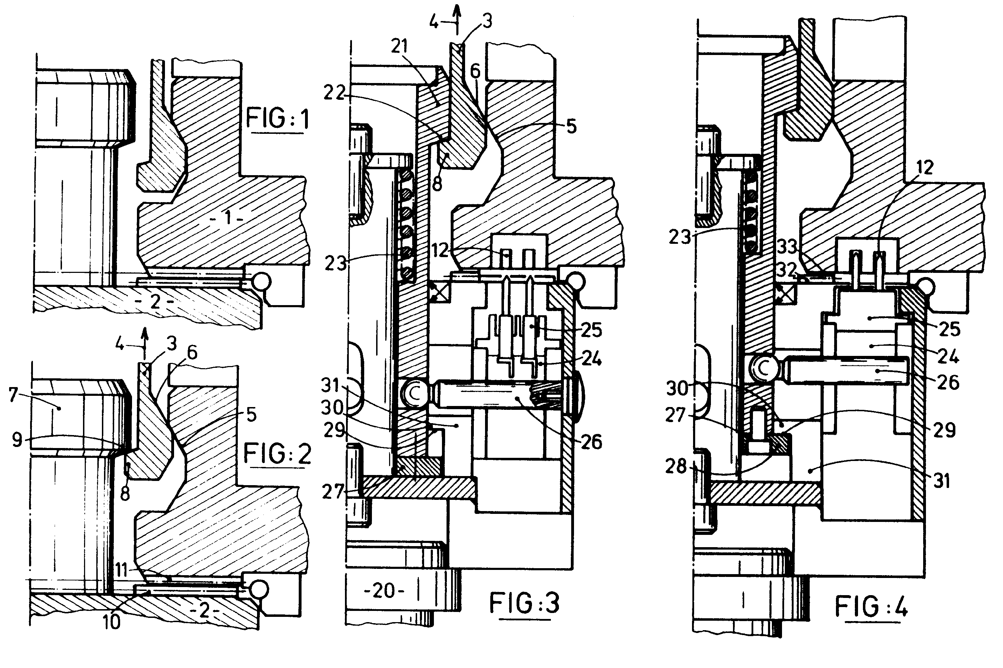

Les figures 1 et 2 dans les dessins joints représentent selon un état connu de la technique un montage de tourelle porte-outil à l'extrémité du coulant d'un tour vertical. Comme il est connu sur ce type de machine-outil et comme le schématise la figure 1, de détail, un coulant 1 vient se placer au-dessus d'une tourelle 2.

Comme représenté sur la figure 2, une pièce 3 du coulant dans son mouvement de recul symbolisé par la flèche 4, guidée par des rampes inclinées coopérantes 5 et 6 du coulant, vient prendre appui sur une tirette 7 de la tourelle 2 au niveau de deux rebords coopérants respectifs 8 et 9. La tourelle 2 est ainsi entrainée par la tirette 7 dans le sens de la flèche 4 et de cette façon, les dents 10 de la tourelle 2 viennent s'engager dans les dents 11 du coulant 1, ce qui assure l'immobilisation et le positionnement de la tourelle 2.

Un des buts de l'invention est d'assurer la réalisation automatique de toute connexion entre une tourelle porte-outil et la machine-outil correspondante dans de bonnes conditions de fiabilité et de sécurité au moyen d'un dispositif simple à mettre en oeuvre et en procurant un gain de temps sur les cycles d'utilisation de la machine.

L'invention doit notamment permettre l'emploi de capteurs de mesure à connecteurs multiples mis en oeuvre dans des cycles automatisés d'usinage.

Ces résultats sont atteints au moyen d'une machine-outil selon la revendication 1.

Avantageusement, la tirette de porte-outil comporte à son extrémité opposée à celle qui porte le rebord coopérant avec le rebord de pièce mobile du coulant une embase susceptible lors du coulissement de la tirette de venir se placer en butée contre une face d'une pièce dudit porte-outil immobilisée après engagement des dents de porte-outil et de coulant, de manière à assurer une course d'engagement des connexions entre porte-outil et éléments de machine et une butée de position du porte-outil sur la machine.

D'autres caractéristiques et avantages de l'invention seront mieux compris à la lecture de la description qui va suivre d'un mode de réalisation de l'invention en référence aux dessins annexés sur lesquels :
- la figure 1 précédemment décrite représente une disposition connue de machine-outil montrant un détail de positionnement d'un coulant au dessus d'une tourelle de machine ;
- la figure 2 qui a également été précédemment décrite représente le détail de machine de la figure 1 lors du déplacement des éléments assurant le positionnement de la tourelle par rapport au coulant au moyen de dents coopérantes ;
- la figure 3 représente, selon une vue de détail de machine-outil analogue à celle des figures 1 et 2, un dispositif de connexion de tourelle porte-outil, dans un mode de réalisation de l'invention ;
- la figure 4 représente, selon une vue analogue à celle de la figure 3, les éléments de la machine-outil et notamment de la tourelle, en position finale de mise en route.

Dans l'application de l'invention à une machine-outil de type tour vertical représentée sur les figures 3 et 4, on a conservé le coulant 1 de la machine comme précédemment décrite en référence aux figures 1 et 2 ainsi que la pièce mobile 3 de coulant ou doigt déplaçable en translation, dans une direction verticale symbolisée par la flèche 4 dans l'exemple de tour vertical, les rampes inclinées coopérantes 5 et 6 et le rebord 8 du doigt 3. Sur ledit coulant 1 sont maintenant disposés des connecteurs fixes 12 et par ailleurs une tourelle porte-outil 20 comporte des aménagements remarquables conformes à l'invention. Une tirette 21 susceptible de coopérer avec le doigt 3 au niveau d'un rebord 22 est reliée à la tourelle 20 par un élément de liaison constitué dans l'exemple représenté aux dessins par un ressort 23. Un ensemble porte-connexion 24 portant des connecteurs 25 est associé à la tourelle 20 et est solidarisé, par exemple au moyen d'un axe 26 avec la tirette 21 de manière à assurer des déplacements en translation, comme cela sera précisé plus loin. A la partie inférieure de la tirette 21, son embase 27 comporte un rebord 28 susceptible de venir en butée sur la face 29 d'un rebord 28 susceptible de venir en butée sur la face 29 d'un rebord 30 d'une pièce 31 solidaire de la tourelle 20. Les connecteurs correspondants 12 et 25 en vue de leur coopération sont l'un mâle et l'autre femelle.

En référence aux figures 3 et 4 et à la description donnée ci-dessus, le mode de fonctionnement du dispositif va maintenant êtré précisé. La position des éléments de machine représentée à la figure 3 correspond à celle qui était représentée dans l'exemple de machine connue à la figure 2, c'est à dire que le déplacement vertical selon la flèche 4 du doigt 3 de coulant, après que le coulant 1 a été disposé au-dessus de la tourelle, a amené les dents 32 de tourelle à s'engager dans les dents 33 de coulant, assurant ainsi le positionnement de la tourelle 20. La raideur choisie du ressort 23 permet lors de cette phase à la tourelle 20 et à la tirette 21 de se comporter comme un ensemble entièrement rigide.
Mais si l'on considère que les conditions de déplacement du doigt de coulant 3 sont identiques par rapport à l'exemple connu, l'épaisseur de rebord 22 de la tirette 21 est supérieure à l'épaisseur du rebord 9 de la tirette antérieure 7, ce qui laisse par conséquent une réserve de course au déplacement vertical du doigt 3 de coulant. Par suite, comme le résultat en a été représenté sur la figure 4, comme la force exercée par le doigt 3 de coulant sur la tirette 21 est supérieure à la force de résistance due à la rigidité du ressort 23, après blocage de la tourelle 20 sur le coulant 1 au niveau des dents 32 et 33, la tirette 21 coulisse vers le haut par rapport à la tourelle 20 et au coulant 1, entraînant une compression du ressort 23. Ce déplacement de la tirette 21 entraîne également par l'intermédiaire de l'axe 26 le déplacement de l'ensemble porte-connexion 24 et l'engagement mutuel des connecteurs 25 associés à la tourelle 20 et des connecteurs fixes 12 solidaires du coulant 1 de machine.

Selon les types de connecteurs utilisés, la connexion ainsi réalisée automatiquement et de manière remarquable, conforme à l'invention peut être de toute nature, notamment électrique, pneumatique ou hydraulique et permet le passage d'un courant ou du fluide correspondant vers tout dispositif monté sur la tourelle 20.

L'ajustement précis de la connexion entre lesdits connecteurs 12 et 25 est obtenu grâce aux moyens de butée mécanique positive prévus entre le rebord 28 de l'embase 27 de la tirette 21 d'une part, et la face 29 du rebord 30 de la pièce 31 solidaire de la tourelle 20 d'autre part.

## Revendications

1. Machine-outil comportant un porte-outil (20) et un élément tel qu'un coulant (1) pourvu d'un élément mobile (3) coopérant avec ledit porte-outil (20) de manière à assurer un positionnement du porte-outil (20) par engagement mutuel de dents (32-33) du coulant (1) et du porte-outil (20) caractérisé en ce que une tirette (21) dudit porte-outil (20) coopérant avec un doigt mobile (3) constituant ledit élément mobile du coulant (1) de machine est reliée audit porte-outil (20) par un élément de liaison tel qu'un ressort (23) de manière à assurer un déplacement de l'ensemble de porte-outil rigide jusqu'à engagement mutuel desdites dents respectives (32-33) de coulant et de porte-outil puis à permettre un coulissement supplémentaire de la tirette (21) par rapport au porte-outil (20) et en ce que ladite tirette (21) de porte-outil est solidarisée au moyen d'un axe (26) avec un ensemble porte-connexion (24) dont les connecteurs (25) sont susceptibles de coopérer avec des connecteurs fixes (12) portés par ledit coulant (1) de machine.

2. Machine-outil selon la revendication 1 dans laquelle ladite tirette (21) du porte-outil (20) comporte à son extrémité opposée à celle qui porte un rebord (22) coopérant avec un rebord (8) du doigt mobile (3) du coulant (1) une embase (27) susceptible lors du coulissement de la tirette (21) de venir se placer en butée contre une face (29) d'une pièce (31) dudit porte-outil (20) immobilisé après engagement des dents (32-33) de porte-outil et de coulant, de manière à assurer une course d'engagement des connexions entre porte-outil (20) et coulant (1) de machine et une butée de position dudit porte-outil par rapport à la machine.

## Patentansprüche

1. Werkzeugmaschine min einem Werkzeugträger (20) und einem Element, z.B. einem Spannring (1), das ein bewegliches Element (3) aufweist, das mit dem Werkzeugträger (20) in der Weise zusammenwirkt, daß die Positionierung des Werkzeugträgers (20) durch gegenseitigen Eingriff zwischen Zähnen (32-33) des Spannrings (1) und des Werk zeugträgers (20) gewährleistet ist,
**dadurch gekennzeichnet,**
daß ein Zugorgan (21) des Werkzeugträgers (20), das mit einem das genannte bewegliche Element bildenden Finger (3) des Spannrings (1) der Maschine zusammenwirkt, mit dem Werkzeugträger (20) durch ein Verbindungselement, z.B. eine Feder (23) in der Weise verbunden ist, daß es ein Verschieben der starren Werkzeugträgereinheit bis zu dem gegenseitigen Eingriff der Zähne (32-33) des Spannrings bzw. des Werkzeugträgers ermöglicht und dann ein zusätzliches Gleiten des Zugorgans (21) relativ zu dem Werkzeugträger (20) erlaubt,
und daß das Zugorgan (21) des Werkzeugträgers durch eine Achse (26) fest mit einer Verbinderträgereinheit (24) verbunden ist, deren Verbinderelemente (25) mit festen Verbinderelementen (12) zusammenwirken können, die von dem Spannring (1) der Maschine getragen werden.

2. Werkzeugmaschine nach Anspruch 1, bei der das Zugorgan (21) des Werkzeugträgers (20) an seinem Ende, das dem Ende entgegengesetzt ist, das eine Randleiste (22) trägt, die mit einer Randleiste (8) des beweglichen Fingers (3) des Spannrings (1) zusammenwirkt, einen Ansatz (27) trägt, der bei der Gleitbewegung des Zugorgans (21) an einer Seite (29) eines Teils (31) des nach dem Eingriff der Zähne (32-33) des Werkzeug- trägers bzw. des Spannrings stillgesetzten Werkzeugträgers (20) zum Anschlag kommen kann, derart daß zwischen Werkzeugträger (20) und Spannring (1) der Maschine ein Hub für den Eingriff der Verbinderelemente und ein Positionsanschlag des Werkzeug- trägers relativ zu der Maschine gewährleistet ist.

## Claims

1. Machine tool comprising a tool carrier (20) and an element such as a runner (1) provided with a movable element (3) working in conjunction with the said tool-carrier (20) in such way as to ensure the positioning of the tool carrier (20) through the mutual engagement of teeth (32-33) on the runner (1) and the said tool carrier (20) characterised in that a puller (21) on the said tool carrier (20) working in conjunction with a movable finger (3) constituting the said movable element of the machine runner (1) is connected to the said tool carrier (20) by a linking element such as a spring (23) in such way as to ensure a movement of the rigid tool carrier assembly until there is the mutual engagement of the said respective teeth (32-33) of the runner and tool carrier and then to allow an additional sliding of the puller (21) in relation to the tool carrier (20) and that the said tool carrier puller (21) is made one with a connector assembly (24) by means of a pin (26), the connectors of which (25) are capable of engaging with fixed connectors (12) carried on the said machine runner (1).

2. Machine tool in accordance with Claim 1 in which the said puller (21 of the tool carrier carries at its end opposite to that which carries a shoulder (22) which works in conjunction with a shoulder (8) on the movable finger (3) of the runner (1), a base (27) which, when the puller (21) slides, is able to butt up against a face (29) on a part (31) of the said tool carrier (20) caused to be stationary after the teeth (32-33) of the tool carrier and runner have become engaged, in such way as to ensure a travel for the connections to be made between tool carrier (20) and machine runner (1) and a position-stop for the said tool carrier in relation to the machine.
